# EUROPÄISCHE PATENTSCHRIFT

(11) **EP 1 976 919 B1**
(45) Veröffentlichungstag und Bekanntmachung des Hinweises auf die Patenterteilung: **13.06.2012**
(21) Anmeldenummer: 07717894.5
(22) Anmeldetag: 09.01.2007
(51) Int. Cl.: C08J 11/04, C08L 101/00, C08L 97/02, E04B 1/74

(54) **VERFAHREN ZUR UMWANDLUNG VON PULVERLACKRESTEN IN FORMKÖRPER FÜR DIE VERWENDUNG IM BAUBEREICH**
METHOD FOR TRANSFORMING PAINT POWDER RESIDUES INTO MOULDED BODIES FOR USE IN THE CONSTRUCTION INDUSTRY
PROCEDE POUR TRANSFORMER DES RESIDUS DE PEINTURES EN POUDRE EN CORPS FAÇONNES DESTINES A ETRE UTILISES DANS LE DOMAINE DU BATIMENT

(30) Priorität: 09.01.2006 DE 102006002425; 09.01.2006 DE 102006002426; 09.01.2006 DE 202006000751 U; 10.05.2006 EP 06090072
(43) Veröffentlichungstag der Anmeldung: 08.10.2008
(73) Patentinhaber: Koryszczuk, Kurt, 16548 Glienike-Nordbahn (DE)
(72) Erfinder: Koryszczuk, Kurt, 16548 Glienike-Nordbahn (DE)
(74) Vertreter: Boeckh, Tobias
(86) Internationale Anmeldenummer: PCT/DE2007/000017
(87) Internationale Veröffentlichungsnummer: WO 2007/079720

(56) Entgegenhaltungen:
- WO-A-02/100616
- DE-A1- 4 441 765
- DE-A1- 10 304 748
- DE-U1- 9 418 618
- US-B1- 6 171 688

## Beschreibung

Die Erfindung betrifft ein Verfahren zur Umwandlung von umweltschädlichen Reststoffen, insbesondere Pulverlackresten, in Formkörper bzw. Wertstoffe, bevorzugt für die Verwendung im Baubereich.

Im Stand der Technik sind Wertstoffe für den Baubereich offenbart, die Abfälle bzw. Reststoffe beinhalten, wobei nach den bekannten nationalen, europäischen oder internationalen Vorschriften oder Verträgen ein Abfall, der verwertet wird, per Definition ein Reststoff ist (z.B. Reststoffbestimmungsverordnung). Die US 6,171,688, US 3,276,895, DE 44 41 565, Database WPI Week 199439, Derwent Publications Ltd., London & JP 06 238690 sowie die KR 2004 0107654 und Database CA, Chemical Abstracts Service, "Recycling process for production of boards using agricultural wastes and spent plastics" & IT 2000 VAO 003 A offenbaren bekannte Formkörper, die mithilfe von Brennprozessen oder einer erhöhten Temperaturzufuhr hergestellt werden können.

Die bekannten Verfahren sind aber aus verschiedenen Gründen nachteilig. Bei der Herstellung der bekannten Wertstoffe werden vor allem thermohärtende Harze eingesetzt, die allerdings nur bei sehr hohem Druck und sehr hohen Temperaturen reagieren. Temperatur und Druck müssen hierbei so hoch gewählt werden, dass während des Herstellungsprozesses mindestens eine erhitzte Flüssigphase vorliegt. In der DE 44 41 765 ist dies beispielsweise eine Dampfheizphase, in der US 6,171,688 wird bei der Produktherstellung eine Flüssigphase aufgrund der hohen Temperaturen offenbart. Auch die US 3,276,895 offenbart einen Gas- und Dampfstrom in speziellen Kammern und weiterhin sehr hohe Temperaturen. Der explizite Einsatz von thermoplastischen Harzschäumen, die immer auch die Verwendung von hohem Druck und hohen Temperaturen offenbaren, die für die Bearbeitung der thermoplastischen Harzschäume erforderlich sind, wird unter anderem in der Database WPI Week 199439, XP002405977 & JP 06 238690 offenbart.

Im Stand der Technik werden zum Teil Pulverlacke bzw. Pulverlackreste zur Herstellung von Werkstücken eingesetzt, wobei die Pulverlacke als Bindemittel fungieren. Hierbei ist es erforderlich, dass die Pulverlackreste einem Brennprozess ausgesetzt werden, wodurch die Pulverlackreste zusammenfließen. Die Erfinder der hier offenbarten erfindungsgemäßen Lehre konnten zeigen, dass Pulverlackreste nicht als Bindemittel eingesetzt werden können, da diese Reste wenig Härtekomponenten aufweisen und dadurch nicht noch einmal aufgeschmolzen werden können. So findet vielmehr eine Verklebung der Kunststoffpartikel der Pulverlackreste statt. Dieser Vorgang ist reversibel, so dass die so gewonnenen Werkstücke bei thermischer Belastung wieder plastisch formbar werden. Die plastische Verformbarkeit ist ein besonderer Nachteil von Werkstücken bzw. Formkörpern, die im Bau- oder Handwerksbereich beispielsweise zur Verschalung eingesetzt werden sollen.

In den vergangenen Jahren haben nationale Gesetzgeber die Bestimmungen verschärft, die den Umgang mit Abfall oder Reststoffen betreffen. Die Begriffe "Abfall", "Sondermüll" oder aber auch "Reststoffe" werden durch die verschiedenen Verordnungen der nationalen Gesetzgeber definiert (in Deutschland beispielsweise durch die Reststoffbestimmungsverordnung, das Reststoffvermeidungsgebot oder die verschiedenen Abfallgesetze); weiterhin werden diese Begriffe durch europäische bzw. internationale Verträge bzw. zwischenstaatliche Abkommen, insbesondere zum Umweltschutz, definiert (auch um ihre zunehmende Freisetzung in die Umwelt zu verhindern).

Zum anderen haben sich insbesondere die Wirtschaftszweige verstärkt entwickelt, in denen derartige Reststoffe anfallen. Diese Entwicklung führt dazu, dass intensiv nach Wegen gesucht werden muss, um diese Reststoffe in einer akzeptablen Art und Weise zu recyceln. Reststoffe im Sinne der Erfindung sind insbesondere Stoffe, die bei der Energieumwandlung oder bei der Herstellung, Be- oder Verarbeitung von Stoffen anfallen, ohne dass der Zweck des Anlagebetriebes hierauf gerichtet ist, bzw. für bewegliche Sachen, die bei der Herstellung, Be- oder Verarbeitung von Gütern in gewerblichen Anlagen oder im Rahmen sonstiger wirtschaftlicher Unternehmen unbeabsichtigt anfallen und verwertet werden können. Mit Inkrafttreten des Kreislaufwirtschafts- und Abfallgesetzes und der damit verbundenen Übernahme des europäischen Abfall-Begriffes wurde in Europa der Begriff des Reststoffes in den Abfall-Begriff integriert, der u. a. im Kreislaufwirtschafts- und Abfallgesetz definiert ist. Außerhalb von Europa gelten entsprechende Vorschriften der nationalen Gesetzgebers die den Begriff des Abfalls für den Fachmann ausreichend klar definieren.

Bei einigen Abfällen ist die Verwertung nahezu problemlos, wie z. B. bei Gülleabfällen (vormals Güllereststoffe), die in Biogasanlagen verarbeitet werden können. Andere Abfälle können hingegen nur sehr schwer weiterverarbeitet werden. So dürfen beispielsweise Abfälle der Pulverlacke-verarbeitenden oder der Glas-verarbeitenden Industrie nicht mehr mit dem bisher bekannten Verfahren deponiert und somit entsorgt werden. Aber selbst Produkte, die natürlicherweise auftreten, müssen aufgrund der bestehenden Gesetzeslage zum Teil wie Sondermüll behandelt werden. So ist es den touristisch aktiven Gemeinden an den Küsten nicht mehr gestattet, das - die Touristen störende - Seegras zu sammeln, um es anschließend auf eine Deponie zu verbringen. Diese Situation stellt Industriebetriebe, Handwerksbetriebe aber auch Kommunen und Gemeinden vor große Probleme.

DE 103 04 748 A1 offenbart eine spritz- und härtbare Masse umfassend Pulverlackreste, mineralische Leichtzuschlagstoffe und Tannin. In den Beispielen wird die Masse entweder bei Raumtemperatur getrocknet (nicht gehärtete Masse), oder 30 min. auf 160°C oder 180°C erhitzt (gehärtete Masse). Die Masse wird nicht verpresst.

WO 02/100616 A1 offenbart einen Formkörper aus einer Mischung von Pulverlackresten und nachwachsenden Rohstoffen (Holzpartikeln oder -pulver) und zusätzlichen Klebstoff. Die Zusammensetzung wird bei Temperaturen von 130-180°C verpresst.

Aufgabe der Erfindung war es daher, ein einfaches, sicheres und effektives Verfahren zur Umwandlung von umweltschädlichen Abfallstoffen in nicht umweltschädliche Produkte bereitzustellen.

Diese Aufgabe wird gelöst durch ein Verfahren zur Umwandlung von umweltschädlichen Abfallstoffen, dadurch gekennzeichnet, dass Pulverlackreste, umfassend Kunststoffe mit mindestens 55 Gew.-% Polyester-, Epoxid-, Polystyrol-, Polyurethan- und/oder Polyamidanteil, mit siliziumhaltigen Mikro- und/oder Hohlkugeln und nachwachsenden Rohstoffen pulverisiert und gemischt werden und mit einem Ein- und/oder Zweikomponenten-Klebstoff in Kontakt gebracht und anschließend bei einer Temperatur von 5° bis 50° Celsius verpresst werden.

Dem durchschnittlichen Fachmann sind die Begriffe Pulverlackreste und nachwachsende Rohstoffe aus verschiedenen internationalen, europäischen, staatlichen und kommunalen Vorschriften zu Recyclingstoffen bekannt. Nachwachsende Rohstoffe gehören bevorzugt zu den erneuerbaren Ressourcen. Sie sind bevorzugt land- und forstwirtschaftlich erzeugte Produkte, die einer Verwendung im Nicht-Nahrungsbereich zugeführt werden. Selbstverständlich ist es auch möglich, land- und forstwirtschaftlich erzeugte Produkte, zu denen auch die Fischerei, die Strandbewirtschaftung oder der Gartenbau gehört, zu verwenden, die vollständig oder teilweise dem Nahrungsbereich zugeordnet werden können (z. B. Algen als Nahrungsmittel oder Füllstoff in Matratzen). Bekannte nachwachsende Rohstoffe sind beispielsweise Holz, Schafwolle, Baumwolle, Stroh oder Weidenruten. Die nachwachsenden Rohstoffe können jeweils verschiedenen Verwendungen zugeführt werden, wie beispielsweise Raps als Nahrungsmittel oder aber als Kraftstoffquelle, beispielsweise für Biodiesel. Nachwachsende Rohstoffe sind im Sinne der Erfindung aber auch solche, die nicht land- oder forstwirtschaftlich erzeugt werden, sondern ein- oder mehrmalig aus der Natur gewonnen werden können; wie z. B. Seegras, welches an den Stränden oder im Meer gewonnen werden kann. Da die Verarbeitung von nachwachsenden Rohstoffen durch Industrie, Forschung und zum Teil Regierungen gefördert wird, gibt es zahlreiche Definitionen für den Begriff der nachwachsenden Rohstoffe. Dennoch ist dem durchschnittlichen Fachmann bekannt, was er unter dem Begriff des nachwachsenden Rohstoffs zu verstehen hat. Es handelt sich hierbei im wesentlichen um organische Produkte, die mit oder ohne das Einwirken des Menschen durch die Natur generiert werden. Im wesentlichen handelt es sich, wie oben angeführt, um land- und forstwirtschaftlich erzeugte Produkte des Nicht-Nahrungsbereiches. Der Begriff der landwirtschaftlich erzeugten Produkte umfasst hierbei auch Produkte, die durch die Pflege von Erholungsgebieten - wie z. B. Stränden - erzeugt werden können, wie z. B. Muschelreste, Buhnenholz, Quallen oder Algen, insbesondere Seegras. Die Zuwendungsgeber, die die Verarbeitung von nachwachsenden Rohstoffen fördern, veröffentlichen regelmäßig Listen von Stoffen, die als nachwachsende Rohstoffe zu klassifizieren sind (z. B. Fachagentur nachwachsende Rohstoffe e.V. in Zusammenarbeit mit dem Bundesministerium für Ernährung, Landwirtschaft und Verbraucherschutz in Deutschland oder den entsprechenden Pendants in anderen Ländern). Demgemäß gehören zu den nachwachsenden Rohstoffen beispielsweise auch Flachs, Hanffasern, Wiesengras, Schafwolle, Getreidegranulat, Zellulose, Sisal, Jute, Kokos oder Holz.

Überraschenderweise hat sich gezeigt, dass die erfindungsgemäßen Formkörper bevorzugt mit Ausgangsstoffen hergestellt werden können, für die teilweise ein Deponieverbot besteht. Diese Ausgangsstoffe werden in den Formkörpern so gebunden, dass ein umweltfreundliches Produkt bereitgestellt werden kann, welches eine geringe Dichte aufweist, Wasser abweisend ist, temperaturbeständig, nicht brennbar, wärmedämmend, chemisch beständig, alkalibeständig, witterungsbeständig, lösungsmittelfrei, geruchsneutral, sehr stabil und/oder druckfest ist.

Es war völlig überraschend, dass Pulverlacke bzw. Pulverlackreste mit siliziumhaltigen Mikro- und/oder Hohlkugeln pulverisiert und gemischt werden können, um sie mit einem Ein- und/oder Zweikomponenten-Klebstoff bei einer Temperatur von 5°C bis 50° Celsius in Kontakt zu bringen und anschließend so zu verpressen, dass ein formstabiler, wärme- und schallabsorbierender und chemisch sehr stabiler Formkörper mit den oben genannten überraschenden Eigenschaften hergestellt werden kann.

Der Pressdruck beträgt in einer bevorzugten Ausführungsform 10 - 300 MPa, bevorzugt 50 - 150 MPa, besonders bevorzugt 100 MPa bevorzugt pro Minute. Vorteilhafterweise entstehen hierdurch Formkörper, die besonders gute Schallabsorptionseigenschaften aufweisen und die weiterhin besonders gut wärmedämmend und überraschend chemisch beständig, druckfest und alkali- sowie sehr witterungsbeständig sind.

Überraschenderweise hat sich gezeigt, dass durch diese einfache und sichere Art der Behandlung eine Umwandlung der genannten Abfallstoffe in ein nicht gesundheits- oder umweltschädigendes Produkt (Wertstoff) möglich ist. Die mit dem erfindungsgemäßen Verfahren gewonnenen Produkte können z. B. in der Industrie als ziegelartiges Einzelelement, als Fertigbauteil, als Verbindungselement für Wand-, Fassadenkonstruktion, zur Wärmeisolierung, zur Schallisolierung bzw. zur Trittisolierung, zur Feuchtigkeitsisolierung in, an, auf, unter Wänden und Fußböden verwendet werden.

Weiterhin ist es möglich, diese Produkte als Verkleidungsmaterial für Wände, Türen sowie für andere Elemente unterschiedlichster Ausführungsform, z. B. als Platten, Fliesen, Panelen oder andere, zu nutzen.

Selbstverständlich ist es auch möglich, die gewonnen Produkte als Industrieartikel für Verkleidungen oder Gehäuse für Haushaltswaren oder Computer bzw. andere Geräte und Vorrichtungen zu verwenden. Besonders bevorzugt ist die Verwendung als Verpackungsmaterial, Konstruktions- oder Verkleidungselement für Möbel- oder in der Auto-, Flugzeug- und Bahnindustrie. Durch die freien geometrischen Gestaltungsmöglichkeiten des Werkstoffes und seine leichte Bearbeitbarkeit ist auch eine Verwendung als architektonisches oder künstlerisches Element, aber auch als Plastikbestandteil, möglich.

Bei der Anwendung als Fassadenplatten zeigt sich gegenüber den Fassadenplatten des Standes der Technik, dass das gewonnene Produkt auf eine Holz- oder Metalllattung aufgebracht werden kann, wodurch kein getrennter Dämmstoff oder ein oberflächlich aufgetragener Putz nötig ist. Hierdurch können die konventionell erstellten, gedämmten und hinterlüfteten Fassaden ersetzt werden.

Durch spezielle Bearbeitung der Oberfläche - z. B. durch Prägung bei der Plattenherstellung - kann aber selbstverständlich auch ein handelsüblicher Putz leicht aufgetragen werden. Da die erfindungsgemäßen Produkte einen sehr geringen Ausdehnungskoeffizienten haben, erfolgt keine Bewegung des Untergrundes und somit kein Reißen des Putzes.

Aufgrund der guten Wärmeeigenschaften des Material ist auch das Aufheizen dieser, beispielsweise als Fassadendekoration bzw. Fassadenkonstruktion, deutlich vermindert. Vorteilhafterweise ist eine solche Fassade auch überstreichbar. Demgemäß eignet sich das erfindungsgemäße Material sehr gut für die Sanierung von bestehenden, vorgehängten Altfassaden durch Überdecken. Ein weiterer Vörteil besteht darin, dass die Oberfläche der erfindungsgemäßen Produkte strukturiert werden kann, d. h. die Platten können lackiert, gepulvert, mit Kunststofffolien überzogen oder selbst als Plattenmaterial eingefärbt werden.

In einer weiteren bevorzugten Ausführungsform der Erfindung handelt es sich bei den nachwachsenden Rohstoffen insbesondere im pulverisierte Bestandteile aus Seegras, Hanf, Jute, Flachs, Ramie bzw. um Kokosfasern, Stroh, Holzfasern, Baumwolle, Leinen oder andere. Im Sinne der Erfindung sind nachwachsende Rohstoffe alle land- und forstwirtschaftlich erzeugten Produkte, die einer Verwendung im Nicht-Nahrungsbereich zugeführt werden können.

Der Formkörper besitzt gute Schallabsorptionseigenschaften und bietet weiterhin Schädlingen und Pilzen keinen Nährboden, wobei diese überraschenden Eigenschaften besser sind als bei bekannten Formkörpern oder beispielsweise bekannten Dämmstoffen aus den oben genannten nachwachsenden Rohstoffen. Vorteilhafterweise bestehen weiterhin nahezu unbegrenzte Möglichkeiten der Formgestaltung. Es war völlig überraschend, dass die erfindungsgemäßen Erzeugnisse mithilfe von Pulvern, Lacken, Streichen, Kunststoffüberzügen und Selbsteinfärbungen so gestaltet werden können, dass die Oberflächen verschiedenste Farben und Formen aufweisen. Die erfindungsgemäßen Erzeugnisse sind beispielsweise nur halb so schwer wie zahlreiche im Stand der Technik bekannte Formkörper. Die Formkörper werden hergestellt, indem die Ausgangsstoffe bevorzugt als Pulver oder Granulat vorliegen. Die mittlere Teilchengröße der Pulverlackreste beträgt bevorzugt 10 bis 25 µm. Selbstverständlich sind auch Pulverlackreste mit einer größeren oder kleineren Teilchengröße einsetzbar. Die recycelten Glaskugeln, die bevorzugt als Blähglas eingesetzt werden, haben eine Korngrößenverteilung von bevorzugt 0,1 bis 0,3 mm. Wenn vorzugsweise Seegras als nachwachsender Rohstoff eingesetzt wird, liegt dieser bevorzugt auch in Pulverform vor. Den Formkörpern können zahlreiche Rest- bzw. Füllstoffe zugesetzt werden, wie z. B. Sand, Keramik, Textiliengewebe oder auch andere Verbundstoffe. Weiterhin können fossile Rohstoffe, wie z. B. Kohleteilchen, Kohlestaub oder Graphit, aber auch metallische Werkstoffe zugesetzt werden.

Demgemäß können durch die Formkörper schädliche Stoffe in nicht gesundheits- oder umweltschädigende Abfälle umgewandelt werden, wobei diese Abfälle, wie oben ausgeführt, durch das Pressen so gestaltet werden können, dass sie vor allem als Baumaterialien, beispielsweise als Verbindungselement bzw. als Wand- oder Fassadenkonstruktion oder als ziegelartige Einzelelemente oder Fertigbauteile eingesetzt werden können. Reststoffe (Abfälle) im Sinne der Erfindung gemäß der nationalen bzw. internationalen Vorschriften oder Standardwerken sind bevorzugt Materialien mit bekannter Zusammensetzung und mit nur geringen organischen Anteilen, die weder Gase noch leicht wasserlösliche Stoffe abgeben können. Selbstverständlich kann es auch vorgesehen sein, Abfälle zu verwenden, die Gase und/oder wasserlösliche Stoffe abgeben. Abfälle sind gemäß den Umweltvorschriften. Stoffe, die im wesentlichen nicht erwünscht sind, aber unvermeidlich bei fast allen industriellen Prozessen anfallen. Durch die verschiedenen Umweltvorschriften ist der Begriff der Abfälle für den Fachmann mit durchschnittlichem Können ausreichend klar definiert (z. B. Reststoffbestimmungsverordnung). Im Sinne der Erfindung sind beispielsweise die Pulverlackreste Abfälle (Reststoffe), die gemäß des von zahlreichen Regierungen herausgegebenen Reststoffverwertungsgebotes nicht einfach deponiert, sondern einer neuen Verwertung zugeführt werden. Aber auch Länder, in denen keine Reststoffverwertungsgebote oder Reststoffbestimmungs-Verordnungen vorliegen, sind bestrebt, Reststoffe nicht dem Abfall zuzufügen, sondern sie weiter zu verwerten.

Der Begriff des Abfalls ist nationalen und internationalen Verträgen für den durchschnittlichen Fachmann ausreichend klar definiert.

Die Ausgangsstoffe werden bevorzugt gründlich gemischt, beispielsweise in einem Labor oder in einem Betonmischer. Diese Mischung kann insbesondere bei einer üblichen Umgebungstemperatur vorgenommen werden (5 bis 35°C). Das Mischen erfolgt so lange, bis sich die eingesetzten Stoffe gleichmäßig verteilt haben. Vorzugsweise ist insbesondere darauf zu achten, dass sich die Epoxid- und oder Polyurethanharzbestandteile aus den eingesetzten Pulverlackresten gut mit den anderen Komponenten vermischt haben. Durch diese Mischung entsteht vorteilhafterweise ein lagerfähiges Halbfabrikat. Dieses Hälbfabrikat kann mit einem Ein- oder Zweikomponenten-Kleber vermischt werden, wodurch eine feuchte Mischung entsteht.

Diese Mischung, bevorzugt die feuchte Mischung, wird 0,1 bis 100 Minuten, bevorzugt 1 bis 10 Minuten bei 5 bis 300 MPa, bevorzugt 20 bis 200 MPa, insbesondere 100 MPa gepresst. Vorteilhafterweise entstehen hierdurch Formkörper, die besonders gute Schallabsorptionseigenschaften aufweisen und die weiterhin besonders gut wärmedämmend und überraschend chemisch beständig, druckfest und alkalibeständig sowie sehr witterungsbeständig sind.

Es ist in einer bevorzugten Ausführungsform vorgesehen, dass die Ausgangsstoffe, insbesondere Pulverlacke, Blähglas und Seegras, zusammen mit dem Zweikomponenten- oder Einkomponenten-Klebstoff direkt (d. h. ohne die Herstellung eines Halbfabrikats) vermischt werden, so dass die feuchte Mischung entsteht, die anschließend gepresst wird. Die Pressung bzw. Verformung der Mischung kann durch einen Doppelbandkalander durch Taktpressen oder durch manuelles Bestücken von Formen, Einrütteln oder leichte Druckanwendung erfolgen, so dass die Produkte in verschiedensten Formen, Farben und Ausgestaltungsformen herstellbar sind.

Vorteilhafterweise sind bereits im Mischungs- bzw. im Ausformungsprozess die Bestandteile des Zwei- oder Einkomponenten-Systems des Klebers relativ flüssig, so dass sie die Oberflächen der eingesetzten Stoffe, wie beispielsweise Pulverlacke, Blähglas und Jute oder Seegras, benetzen und vorteilhafterweise ein ideales Brückenmedium zwischen den zu verbindenden Teilchen herstellen. Die gleichmäßige Belegung der eingesetzten Komponenten durch die Bestandteile des Ein- oder Zweikomponenten-Systems wird vorteilhafterweise noch durch die Reibungsladung der Bestandteile der Pulverlackreste verbessert.

Die so gewonnenen Produkte (Formkörper) weisen verbesserte chemische, mechanische und physikalische Eigenschaften gegenüber den bekannten Verbundstoffen auf, wobei gleichzeitig eine Substitution herkömmlicher Inhaltsstoffe durch umweltschonendere und kostengünstigere Ausgangsstoffe erfolgen kann. Insbesondere der Einsatz der nachwachsenden Rohstoffe wie Hanf, Jute, Seegras und Sisal sowie von recyceltem Glas und Kunststoffen, vor allem in Form von Pulverlackresten führt zu einer Verbesserung der gewonnenen Produkten, insbesondere zu einer verbesserten Feuchtigkeitsbeständigkeit, Schalldämmung, Wärmedämmung, chemischen Beständigkeit und dazu, dass die Produkte schwer entflammbar oder durch Basen zersetzbar sind.

Es zeigt sich, dass die erfindungsgemäßen Formkörper völlig überraschend schwerer entflammbar und witterungsbeständiger sind als bekannte Formkörper oder Produkte aus bekannten nachwachsenden Rohstoffen ohne die erfindungsgemäßen mineralischen Leichtzuschlagstoffe und Pulverlackreste umfassend Kunststoff mit mindestens 50 Gew.-% Polyester-, Epoxid-, Polystyrol-, Polyurethan- und/oder Polyamid-Anteilen.

Zur im wesentlichen endgültigen Aus- und Durchhärtung wird je nach Kunststoff und prozentuellem Anteil des Kunststoffbindemittels eine Zeit von 10 bis 20 Minuten benötigt, wenn die im Stand der Technik bekannten Kunstharze verwendet werden.

Bevorzugte siliziumhaltige Mikro- und/oder Hohlkugeln sind die genannten Blähglaskugeln bzw. Glasfraktionen, die vorteilhafterweise für die Glasindustrie zur Neuproduktion von Flaschen und Gläsern nicht mehr geeignet sind und durch einen Recyclingkreislauf generiert werden sollen. Die Blähglaskugeln sind sehr leicht, bruchkornfrei und extrem druckstabil. Sie haben eine durchschnittliche Größe von bevorzugt 0,04 bis 16 mm, wobei sich Körnungen der Größenordnung von besonders bevorzugt 0,1 bis 0,3 mm insbesondere bewährt haben.

Als pulverförmige thermoplastische und/oder duroplastische Kunststoffpartikel werden Pulverlackreste bevorzugt, wie sie in Lack- und Pulvereibetrieben in großen Mengen als Abfallstoff anfallen, wobei geeignete Korngrößen im Bereich von 10 bis 20 µm liegen.

Als nachwachsender Rohstoff hat sich insbesondere Seegras bewährt. Selbstverständlich können auch Algen bzw. alle Pflanzen verwendet werden, die in oder an Gewässern (Schilf) wachsen. Überraschenderweise führen diese dazu, dass die Formkörper sehr temperaturbeständig, alkalibeständig und nicht brennbar sind. Selbstverständlich ist es während eines Brandes möglich, dass der Formkörper benachbart zu leicht brennbarem Material vorliegt. Wenn derartiges leicht entzündliches Material brennt, entstehen insbesondere durch den Einsatz von Seegrasgewächsen im Formkörper keine giftigen Gase. Durch den hohen Salzgehalt der Pflanzen sind die Materialien sehr haltbar und werden nicht von Schädlingen und Parasiten angefallen. Diese Stoffe regulieren Feuchtigkeit gut und puffern diese. Weiterhin besitzen Bestandteile dieser Pflanzen gute Dämmeigenschaften.

Weiterhin können in die Mischung der Ausgangsstoffe weitere, dem Fachmann bekannte Füll- und Verstärkungsstoffe wie Glasfasern oder -gewebe eingesetzt werden.

Im Gegensatz zu den bekannten Formkörpern, herstellbar nach den bekannten Verfahren, ist es möglich, mit den erfindungsgemäßen Formkörpern höhere Quadratmeterleistungen zu erzielen, da die Ausgangsstoffe besser handhabbar sind. Dies bedeutet auch, dass man mehrschichtige Platten herstellen kann, z. B. eine dreischichtige Platte, deren Kern einen geringen Bindemittelanteil und deren äußere Schichten einen höheren Bindemittelanteil aufweisen oder bei denen die einzelnen Schichten unterschiedliche Füll- und/oder Bindemittelsysteme besitzen. Dies wird z. B. dadurch erzielt, dass zunächst auf einer Unterlage die Kernschicht gestreut wird, z. B. aus einem Doppelbandkalander, wie z. B. eine 2 mm Platte mit 10 Gew.-% Epoxidharz als Bindemittel, und dann auf die jeweiligen Seiten dieser Platte eine 2 mm Schicht mit 10 Gew.-% Polyurethan als Bindemittel aufgebracht wird. Mithilfe dieser veränderbaren Zusammensetzung bzw. durch eine spezifische Auswahl der eingesetzten Ausgangsstoffe sind vorteilhafterweise unterschiedliche Werkstoffeigenschaften realisierbar, wie z. B. geringes spezifisches Gewicht, Wärmeisolationsvermögen, Wärmeleitung, Steifigkeit, mechanische Festigkeit, elektrische Leitfähigkeit bzw. Isolierung, magnetische Leitfähigkeit, paramagnetische Eigenschaften, Korrosionsbeständigkeit und schwere Entflammbarkeit.

In einer weiteren bevorzugten Ausführungsform sind die siliziumhaltigen Mikro- und/oder Hohlkugeln ausgewählt aus der Gruppe umfassend Glasschaumschotter, Glasschaumgranulat, Blähglas, Blähbeton und/oder Ceralith. Vorteilhafterweise sind in diesem Falle die Formkörper besonders temperaturbeständig und ausgesprochen wärmedämmend sowie sehr geruchsneutral.

In einer weiteren bevorzugten Ausführungsform ist das Blähglas ausgewählt aus der Gruppe umfassend Foamglas, Schaumglas, Wasserglas, Isolierglas, Überfangglas, Eisblumenglas, Kali-Wasserglas, Kalium-Wasserglas und/oder Natron-Wasserglas. Vorteilhafterweise weisen derartige Formkörper besonders geringe Dichten, sind besonders temperaturbeständig und sehr chemisch beständig.

In einer weiteren bevorzugten Ausführungsform ist vorgesehen, dass der Formkörper gemäß der Erfindung einen Leichtzuschlagstoff mit einer Dichte von unter 1 g/cm³ aufweist. Vorteilhafterweise weisen in diesem Falle die Formkörper viele Oberflächengestaltungsmöglichkeiten und eine unbegrenzte Möglichkeit der Formgestaltung auf und weiterhin sind sie sehr stabil und druckfest.

In einer weiteren bevorzugten Ausführungsform der Erfindung werden die nachwachsenden Rohstoffe aus Pflanzen gewonnen, ausgewählt aus der Gruppe umfassend Alant, Algen, Anis, Arnika, Bärlauch, Baldrian, Basilikum, Baumwolle, Blauglockenbaum, Beifuss, Beinwell, blauer Steinklee, Blaumohn, Bohnenkraut, Borretsch, Breitwegerich, große Brennnessel, Buche, Chinaschilf, Dill, Dost (Staudenmajoran), iberischer Drachenkopf, echte Kamille, Eibisch, Erbse, Estragon, Färberdistel, Färberwaid, Faserhirse, Faserlein, Fasernessel, Fenchel, roter Fingerhut, wolliger Fingerhut, Flachs, Gerste, Hafer, Hanf, Hirse, Zuckerhirse, Johanniskraut, Jute, Kartoffel, Kegelblume (Sonnenhut), Kenaf, Knoblauch, Kokos, Koriander, Krambe, Kümmel, Lein, Leindotter, Liebstöckel, Lupinen, Mais, Majoran, Melisse, Pappel, Petersilie, Pfefferminze, Raps, Rhabarber, Riesenknöterich, Ringelblume, Rizinus, Roggen, Rübsen, Schabzigerklee, Schilf, Sisal, Soja, Spitzwegerich, Sonnenblume, Süßlupinen, Tanne, Thymian, Topinambur, Torfmoose, rauer Wallwurz, Wegerich, Weide, Weizen, Wildbirne, kreuzblättrige Wolfsmilch, Zitronenmelisse und/oder Zuckerrübe. Überraschenderweise führt die Verwendung der genannten nachwachsenden Rohstoffe zu ähnlich guten Eigenschaften wie die Verwendung von Seegras, d. h. zu einer überraschend geringen Dichte, zu guten wasserabweisenden Eigenschaften, zu Temperaturbeständigkeit, zu Nicht-Brennbarkeit, zu sehr guten Wärmedämm- und Schallabsorptionseigenschaften, zu chemischer Beständigkeit sowie zu Alkali- und Witterungsbeständigkeit sowie zu einer überraschend guten Geruchsneutraliät, wobei die Formkörper sehr stabil und druckfest sind sowie Pilzen und anderen Schädlingen keine Nährböden bieten und an der Oberfläche gut gestaltet, wie z. B. gepulvert, gelackt, gestrichen oder durch Selbsteinfärbung bzw. durch den Überzug von Kunststoffen werden können. Es war überraschend, dass sich die erfindungsgemäßen Formkörper auf diese zahlreichen Arten an ihrer Oberfläche behandeln lassen.

In einer weiteren bevorzugten Ausführungsform sind die Mikro- und/oder Hohlkugeln Glas und insbesondere Blähglas-Bestanteile bevorzugt mit einer Dichte unter 1. Bei den Kunststoffen mit einem mindestens 55 Gew.-% Anteil von Polyester, Epoxid, Polystyrol, Polyurethan und oder Polyamiden handelt es sich um Kunststoffe, die von den genannten Verbindungen mindestens 60 Gew.-%, bevorzugt mindestens 70 Gew.-% aufweisen. Weiterhin ist es bevorzugt, dass diese Ausgangsmaterialien (Kunststoffe) eine Korngröße von 0,1 bis 0,5 mm besitzen. Bevorzugt handelt es sich bei diesen Verbindungen um duroplastische oder thermoplastische Pulverlacke. Pulverlacke im Sinne der Erfindung setzen sich in einer bevorzugten Ausführungsform aus drei Bestandteilen zusammen: Bindemittel, Härter (auch als Vernetzer bezeichnet) und Pigmente. Besonders bevorzugt ist es, wenn die Ausgangsstoffe gemischt und die anschließend entstandene Mischung bei Raumtemperatur in einem Zeitraum von 0,1 bis 100 Minuten, bevorzugt 1 bis 30 Minuten verpresst wird. Überraschenderweise wird hierdurch ein besonders witterungsbeständiger und besonders schall- und wärmeabsorbierender Formkörper gewonnen.

In einer weiteren bevorzugten Ausführungsform ist es vorgesehen, dass die Ausgangsstoffe (Pulverlackreste, nachwachsende Rohstoffe und siliziumhaltige Mikro- und/oder Hohlkugeln) in pulverisierter Form gemischt werden, wodurch ein lagerfähiges Halbfabrikat entsteht. Dieses lagerfähige Halbfabrikat kann in einer bevorzugten Ausführungsform nach einer gewissen Zeitspanne der Lagerung mit einem Ein- und/oder Zweikomponenten-Kleber in Kontakt gebracht werden. Vorteilhafterweise entsteht so ein ganz besonders chemiebeständiger Formkörper.

In einer weiteren bevorzugten Ausführungsform der Erfindung werden die trockenen Ausgangsstoffe ausgewählt aus nachwachsenden pflanzlichen Trockenprodukten wie Hanf, Jute und Seegras, aufbereitetem Altglas, Pulverlackresten und ggf. noch Keramik, Sand, Textilien/Gewebe oder anderen Verbundstoffen. Hierbei werden die nachwachsenden Rohstoffe als Füllstoffe verwendet; als Füllstoff kann aber auch recyceltes Glas bzw. die Pulverlackreste, insbesondere Thermoplast- und/oder Duroplast-Pulver verwendet werden. Diese Komponenten werden z. B. mit einem üblichen Mischer bei Umgebungstemperatur gründlich gemischt, bis sich die Füllstoffe gleichmäßig mit dem ebenfalls zugegebenen Epoxid- und/oder Polyurethanharz bei Raumtemperaturen und Druck - z. B. in einer hydraulischen Plattenpresse - zu einem definierten Formkörper oder Formbehälter verbunden haben. Die Verformung kann auch in einem Doppelbandkalander durch Taktpressen oder durch manuelles Bestücken von Formen, Einrütteln oder leichte Druckanwendung erfolgen, so dass die Erzeugnisse universell herzustellen sind.

In einer weiteren Ausführungsform sind bereits im Herstellungs- bzw. Ausformprozess zusätzliche lösemittelfreie Zweikomponenten-Systeme auf Epoxid- und/oder Polyurethanbasis zugesetzt, wobei die Härtekomponente bevorzugt aus Isocyanaten besteht. Die lösemittelfreien Zweikomponenten-Systeme sind im frischen Zustand relativ flüssig und benetzen die Oberfläche der oben genannten Füllstoffe vollständig und stellen so ein Brückenmedium zwischen den zu verbindenden Teilchen her. Die gleichmäßige Belegung wird auch durch die Reibungsladung des Kunststoffpulvers bewirkt. Nach einer definierten Aushärtzeit kann das Kombinationselement aus dem Formbehälter fertig entnommen, weiter verarbeitet oder als Endprodukt eingesetzt werden.

Die anmeldungsgemäße Lehre zeichnet sich durch folgende Merkmale aus:
- Abkehr vom technisch Üblichen
- neue Aufgabenstellung
- Vorliegen eines seit langem ungelösten dringenden Bedürfnisses für die Lösung des mit der Erfindung gelösten Problems
- bisheriges vergebliches Bemühen der Fachwelt
- die Einfachheit der Lösung spricht für erfinderische Tätigkeit, insbesondere da sie kompliziertere Lehren ersetzt
- Entwicklung der wissenschaftlichen Technik ging in eine andere Richtung
- entwicklungsstraffende Leistung
- Fehlvorstellungen der Fachwelt über die Lösung des entsprechenden Problems (Vorurteil)
- technischer Fortschritt, wie z. B.: Verbesserung, Leistungssteigerung, Verbilligung, Ersparnis an Zeit, Material, Arbeitsstufen, Kosten oder schwer beschaffbaren Rohstoffen, erhöhte Zuverlässigkeit, Beseitigung von Fehlern, Qualitätshebung, Wartungsfreiheit, größere Effektivität, höhere Ausbeute, Vermehrung der technischen Möglichkeiten, Bereitstellung eines weiteren Mittels, Eröffnung eines zweiten Weges, Eröffnung eines neuen Gebietes, erstmalige Lösung einer Aufgabe, Reservemittel, Alternativen, Möglichkeit der Rationalisierung, Automatisierung oder Miniaturisierung oder Bereichung des Arzneimittelschatzes
- glücklicher Griff, da aus einer Vielzahl von Möglichkeiten eine bestimmte gewählt wurde, deren Ergebnis nicht vorausgesagt werden konnte, daher handelt es sich um ein patentwürdigen glücklichen Griff)
- Irrtum in Entgegenhaltungen
- junges Gebiet der Technik
- Kombinationserfindung, d.h. mehrere bekannte Elemente werden zu einer Kombination zusammengeführt, die einen überraschenden Effekt aufweist
- Lizenzvergabe
- Lob der Fachwelt und
- wirtschaftlicher Erfolg.

Diese Eigenschaften betreffen insbesondere die bevorzugten Ausführungsformen der Erfindung.

Die überraschenden Eigenschaften bedingen zahlreiche Einsatzgebiete und Verwendungen der erfindungsgemäßen Formkörper. Insbesondere in der Bauindustrie können diese als leicht zu bearbeitender, recyclebarer Baustoff verwendet werden, insbesondere als ziegelartige Einzelelemente, als Fertigbauteil, als Verbindungselemente für Wand- und Fassadenkonstruktionen, zur Wärmeisolierung, zur Schallisolierung bzw. zur Trittisolierung, Feuchtigkeitsisolierung in, an, auf und/oder unter Wänden, Türen und Fußböden, bzw. als Verkleidungsmaterial für Wände, Türen sowie für andere Elemente in unterschiedlichsten Ausführungsformen (Platten, Fliesen, Paneele und andere). Die erfindungsgemäßen Formkörper können demgemäß allgemein als Industrieartikel bei Verkleidungen, bei Gehäusen von Computern u. ä. aber auch bei Haushaltswaren unterschiedlichster Art als Verpackungsmaterial, als Konstruktionselemente, Verkleidungselemente für Möbel und in der Auto-, Flugzeug- und/oder Bahnindustrie verwendet werden. Durch die freien geometrischen Gestaltungsmöglichkeiten der Formkörper und ihre leichte Bearbeitbarkeit ist eine Anwendung für architektonische Elemente sowie Plastiken auch im künstlerischen Sinne möglich. Es war überraschend, dass sich die erfindungsgemäßen Formkörper außergewöhnlich gut sägen, schrauben, bohren, kleben und nieten lassen. Vorteilhafterweise können die erfindungsgemäßen Formkörper besonders gut als Fassadenplatte eingesetzt werden, indem sie beispielsweise auf eine Holz- oder Metalllattung aufgebracht werden. Vorteilhafterweise ist dadurch weder ein getrennter Dämmstoff noch ein oberflächlich aufgetragener Putz nötig, so dass eine konventionell erstellte, gedämmte und hintergelüftete Fassade ersetzt werden kann. Durch spezielle Bearbeitung der Oberfläche wie z. B. Prägung bei der Plattenherstellung kann ein handelsüblicher bekannter Putz leicht aufgetragen werden. Überraschenderweise haben die erfindungsgemäßen Formkörper einen sehr niedrigen Ausdehnungskoeffizienten, so dass keine Bewegung des Untergrundes und somit kein Reißen des Putzes erfolgt. Es war weiterhin überraschend, dass bei dunkler Farbe wegen der guten Wärmedämmeigenschaften der Formkörper kein Aufheizen der Fassade auftritt. Solche Fassaden sind vorteilhafterweise sehr gut überstreichbar. Demgemäß eignet sich das erfindungsgemäße Material - d. h. die Formkörper - sehr gut für die Sanierung von bestehenden so genannten vorgehängten Altfassaden durch Überdecken. Es war weiterhin überraschend, dass die erfindungsgemäßen Formkörper auf ihrer Oberfläche sehr gut strukturiert werden können. Sie können beispielsweise sehr gut lackiert, gepulvert, mit Kunststofffolien überzogen oder selbst als Plattenmaterial eingefärbt werden. Besonders überraschend war es, dass die anmeldungsgemäßen Formkörper ihre vorteilhaften Eigenschaften dann aufweisen, wenn sie mit Pulverlackresten hergestellt werden.

Es war völlig überraschend, dass die Formkörper mit ihren überraschenden vorteilhaften Eigenschaften, bei einer Temperatur von 5° bis 50° Celsius hergestellt werden können bzw. mit einem Verfahren, bei dem das Verpressen bei einer Temperatur von 5° bis 50° Celsius erfolgt. Der durchschnittliche Fachmann wurde durch den oben genannten Stand der Technik regelmäßig angeregt, beim Verpressen bzw. während des gesamten Verfahrens Temperaturen von mindestens 90°C zuzuführen bzw. den Prozess bei mindestens 90°C bis 300°C durchzuführen. Dies ist unter anderem darauf zurückzuführen, dass Pulverlackreste im Stand der Technik als Bindemittel eingesetzt werden bzw. dass Thermoplastepartikel verwendet werden, die während des Prozesses erwärmt und aufgeschmolzen werden müssen. Es ist das Verdienst der Erfinder gezeigt zu haben, dass die bekannten Verfahren einfach, sicherer und effektiver gestaltet werden kann, indem auf die Zufuhr von hohen Temperaturen von mindestens 90°C bzw. auf die Verwendung von Pulverlacken als Bindemittel verzichtet werden kann und dass die hierdurch gewonnenen Formkörper überraschend vorteilhafte Eigenschaften gegenüber den bekannten Formkörpern aufweisen.

Im Folgenden soll die Erfindung anhand von Beispielen näher erläutert werden, ohne auf diese Beispiel beschränkt zu sein.

### Beispiel 1

Pulverlackreste (auf Polyester/Epoxidbasis) von der mittleren Teilchengröße 10-25 µg, recycelte Glaskugeln (Poraver) mit einer Korngrößenverteilung von 0.1-0.3 mm und Seegras (zostera dämm)/(Pulverkonsistenz) wurden in einem Trommelmischer bei normaler Raumtemperatur (15-20°C) ca. 5-10 Minuten lang gut vermischt. Dieses Halbfabrikat kann, so wie es ist, gut gelagert oder weiterverarbeitet werden. Dieses Halbfabrikat wird anschließend mit einem lösemittelfreien Zweikomponenten-Klebstoff (Henkel-Ubatol UK 820) auf Polyurethanbasis intensiv 5-10 Minuten lang vermischt, wobei die beiden Komponenten (Harzkomponente und Härtekomponente) in einem Gewichtsverhältnis von 4:1 zu verwenden sind. Durch die spontan einsetzende chemische Reaktion wird eine stabile Bindung hervorgerufen, so dass das Gemisch in eine Form eingeschüttet werden kann. Die Abmessung der Form beträgt 300 x 300 x 10 mm. Nun wird diese Form mit einer Abdeckplatte versehen und in eine beheizbare Plattenpresse geschoben. Bei 20°C und 100 MPa wird das Gemisch ca. 1 Minute verpresst, anschließend wird entformt und ca. 10 Minuten lang zum vollständigen Aus- bzw. Durchhärten ruhen lassen.
Des Gemisch bestand aus:
30 Gew.-% Pulverlackreste
20 Gew.-% recycelte Glaskugeln
20 Gew.-% Seegras (Pulverkonsistenz)
30 Gew.-% Zweikomponentenklebstoff
Es ergab sich ein dauerhafter, fester Verbund mit einer sehr glatten, ebenen Oberfläche.

### Beispiel 2 (Vergleich)

30 Gew.-% Pulverlackreste
20 Gew.-% recycelte Glaskugel
20 Gew.-% Flammschutzmittel (Ammonium Polyphosphat/Zinkborat)
30 Gew.-% Zweikomponentenklebstoff
wurden in einem Mischer intensiv vermischt, anschließend in eine Plattenform, die mit einer PTFE-Beschichtung versehen ist, geschüttet. Es erfolgte eine Pressung in einer Plattenpresse bei 20°C und 100 MPa für 1 Minute. Es wurde entformt und ca. 10 Minuten lang ruhen lassen. Die Brandversuche, welche mit dem Plattenmaterial nach DIN 4102 durchgeführt wurden, verliefen positiv.

### Beispiel 3

30 Gew.-% Pulverlackreste
10 Gew.-% recycelte Glaskugel
20 Gew.-% Seegras (Pulverkonsistenz)
10 Gew.-% Flammschutzmittel
30 Gew.-% Zweikomponentenklebstoff
wurden gemischt, gepresst, entformt und ausgehärtet. Bei den Brandversuchen mit diesem Plattenmaterial (wobei ein Austausch der Füllkomponenten erfolgte) zeigten die Ergebnisse gleiche Werte wie bei Beispiel 2, obwohl ein Anteil der teureren Flammschutzmittel gegen das preisgünstigere und umweltfreundliche Seegras ausgetauscht wurde.

## Patentansprüche

1. Verfahren zur Umwandlung von Abfallstoffen, die insbesondere Pulverlackreste umfassen,
**dadurch gekennzeichnet, dass**
die Pulverlackreste umfassend Kunststoffe mit mindestens 55 Gew.-% Polyester-, Epoxid-, Polystyrol-, Polyurethan- und/oder Polyamidanteil mit siliziumhaltigen Mikro- und/oder Hohlkugeln und nachwachsenden Rohstoffen pulverisiert und gemischt und mit einem Ein- und/oder Zweikomponenten-Klebstoff in Kontakt gebracht und anschließend bei einer Temperatur von 5° bis 50° Celsius verpresst werden.

2. Verfahren nach Anspruch 1,
**dadurch gekennzeichnet, dass**
die Pulverlackreste, die Mikro- und/oder Hohlkugeln, bevorzugt Blähglas und die nachwachsenden Rohstoffe, bevorzugt Seegras, in pulverisierter Form gemischt werden, wodurch ein lagerfähiges Halbfabrikat entsteht, und das Halbfabrikat mit dem Ein- und/oder Zweikomponenten-Klebstoff in Kontakt gebracht wird.

3. Verfahren nach einem der Ansprüche 1 oder 2,
**dadurch gekennzeichnet, dass**
das Verpressen 0,1-100 Minuten, bevorzugt 1 bis 10 Minuten bei 5 bis 300 MPa, bevorzugt 20 bis 200 MPa, insbesondere 100 MPa erfolgt.

4. Wertstoff erhaltbar nach dem Verfahren gemäß den Ansprüchen 1 bis 3.

5. Wertstoff nach Anspruch 4,
**dadurch gekennzeichnet, dass**
dieser als die Mikro- und/oder Hohlkugeln Blähglas und als den nachwachsenden Rohstoff Seegras umfasst.

6. Verwendung des Wertstoffs nach Anspruch 4 oder 5 zur Wärme-, Schall-, Tritt- und/oder Feuchtigkeitsisolierung.

7. Verwendung nach dem vorhergehenden Anspruch,
**dadurch gekennzeichnet, dass**
die Isolierung in/an/auf und/oder unter einer Wand oder einem Fußboden oder einer Tür erfolgt.

8. Verwendung des Wertstoffs nach Anspruch 4 oder 5,
**dadurch gekennzeichnet, dass**
die Verwendung der Wertstoffe als Verpackungsmaterial, Konstruktions- und/oder Verkleidungselement in der Möbel-, Auto-, Flugzeug- und/oder Bahnindustrie erfolgt.

## Claims

1. Method to convert waste materials that, in particular, include powder coating residues, **characterized in that** the powder coating residues consisting of synthetic materials with at least 55 weight percent of polyester, epoxide, polystyrene, polyurethane and/or polyimide with silicon containing micro and/or hollow spheres and renewable raw materials are powdered and mixed and brought into contact with one and/or two-component adhesives and then are pressed at a temperature between 5° and 50° Celsius.

2. Process according to claim 1,
**characterized in that** the powder-coating residues, the micro and/or hollow spheres, preferably foam glass and the renewable raw materials, preferably sea weed are mixed in powdered form, which will produce a storable semi-finished product, and that the semi-finished product is brought into contact with the one and/or two-component adhesive.

3. Process according to one the claims 1 or 2,
**characterized in that** the pressing will take place between 0.1 and 100 minutes, preferably 1 to 10 minutes at 5 to 300 MPa, preferably 20 to 200 MPa, especially 100 MPa.

4. Resource is preservable according to the process according to claims 1 to 3.

5. Resource according to claim 4,
**characterized in that** the micro and/or hollow spheres consist of foam glass and the renewable resource consists of sea weed.

6. Use of the resource according to claim 4 or 5 as heat, sound, impact or moisture insulation.

7. Use according to the previous claim,
**characterized in that** the insulation takes place in/on/at and/or behind a wall or below a floor or a door.

8. Use of the resource according to claim 4 or 5,
**characterized in that** the resource is used as packaging material, construction and/or cladding elements in the automobile, aircraft and/or railway industry.

## Revendications

1. Procédé de transformation de déchets contenant en particulier des résidus de peinture en poudre
**caractérisé en ce que**
les résidus de peinture en poudre contenant des matières synthétiques avec au moins 55% en poids de partie de polyester, d'époxy, de polystyrène, de polyuréthane et/ou de polyamide sont pulvérisés et mélangés avec des microsphères et/ou des sphères creuses contenant du silicium et des matières premières renouvelables et mis en contact avec une colle à un et/ou deux composants et ensuite pressés à une température de 5° à 50° Celsius.

2. Procédé selon la revendication 1
**caractérisé en ce que**
les résidus de peinture en poudre, les microsphères et/ou sphères creuses, de préférence du verre gonflé et les matières premières renouvelables, de préférence de la zostère, sont mélangées sous forme pulvérisée, donnant ainsi un semi-produit pouvant être stocké et le semi-produit étant mis en contact avec une colle à un et/ou deux composants.

3. Procédé selon l'une des revendications 1 ou 2
**caractérisé en ce que**
la pression s'effectue pendant 0,1-100 minutes, de préférence 1 à 10 minutes à 5 à 300 MPa, de préférence 20 à 200 MPa, en particulier à 100 MPa.

4. Matériau pouvant être obtenu conformément au procédé selon les revendications 1 à 3

5. Matériau selon la revendication 4,
**caractérisé en ce que**
celui-ci contient du verre gonflé comme microsphères et/ou sphères creuses et de la zostère comme matière première renouvelable.

6. Utilisation du matériau selon la revendication 4 ou 5 pour isolation thermique, sonore, contre les bruits de pas et/ou l'humidité.

7. Utilisation selon la revendication précédente
**caractérisée en ce que**
l'isolation s'effectue dans/contre/sur et/ou sous un mur ou un sol ou une porte.

8. Utilisation du matériau selon la revendication 4 ou 5
**caractérisée en ce que**
les matériaux sont utilisées comme matériau d'emballage, élément de construction et/ou d'habillage dans les industries du meuble, automobile, aéronautique et/ou ferroviaire.
